# EUROPEAN PATENT APPLICATION

(11) **EP 4 576 329 A1**
(43) Date of publication of application: **25.06.2025**
(21) Application number: 23879131.3
(22) Date of filing: 18.10.2023
(51) Int. Cl.: H01M 10/613

(54) **BATTERY PACK AND ELECTRIC TOOL SYSTEM**

(30) Priority: 21.10.2022 CN 202211294707; 31.08.2023 CN 202311123845; 07.09.2023 CN 202322437140 U
(71) Applicant: Nanjing Chervon Industry Co., Ltd., Nanjing, Jiangsu 211106 (CN)
(72) Inventor: YANG, Dezhong, Nanjing, Jiangsu 211106 (CN); LI, Da, Nanjing, Jiangsu 211106 (CN)
(74) Representative: Sun, Yiming
(86) International application number: PCT/CN2023/125159
(87) International publication number: WO 2024/083143

(57) **Abstract**

A power tool, a charging device, a battery pack, and a heat dissipation structure. The power tool (10) includes a housing (110), a printed circuit board assembly, and a heat absorber (130). The printed circuit board assembly is disposed in the housing (110). The heat absorber (130) is in thermal contact with at least part of the printed circuit board assembly and configured to absorb heat generated by the printed circuit board assembly. The heat absorber (130) includes a hydrogel (133).

## Description

This application claims priority to Chinese Patent Application No. 202211294707.9 filed with the China National Intellectual Property Administration (CNIPA) on Oct. 21, 2022, Chinese Patent Application No. 202311123845.5 filed with the CNIPA on Aug. 31, 2023, and Chinese Patent Application No. 202322437140.2 filed with the CNIPA on Sep. 7, 2023, the disclosures of which applications are incorporated herein by reference in their entireties.

### TECHNICAL FIELD

The present application relates to a heat dissipation structure, for example, a battery pack and a power tool system.

### BACKGROUND

The power tool in the related art is a tool that uses electrical energy as a power source and can output linear motion or rotational motion. Many types of power tools exist, such as a sander, an impact drill, an electric wrench, and a mower. Power tools of different types are widely used in different usage scenarios and thus have a broad scope of usage.

The controller is an indispensable part of the power tool. The more diversified the functions of the power tool are, the higher the power density of the controller is. However, the compactness and lightweight of the power tool lead to a decrease in the heat dissipation rate of the controller and an increase in the temperature rise rate, causing the power tool to shut down due to over-temperature protection.

This part provides background information related to the present application, and the background information is not necessarily the existing art.

### SUMMARY

An object of the present application is to solve or at least alleviate part or all of the preceding problems. Therefore, the first object of the present application is to provide a battery pack and a power tool system to improve the heat dissipation efficiency of the power tool.

The present application provides a battery pack applicable to a power tool. The battery pack includes a housing; a cell assembly disposed in the housing and including at least one cell unit; and a heat absorber in thermal contact with at least part of the at least one cell unit, where the heat absorber is configured to absorb heat generated by the cell assembly during charging and discharging processes. The heat absorber includes a hydrogel.

In some examples, the cell assembly includes at least two cell units, and the heat absorber is at least partially disposed between the at least two cell units.

In some examples, multiple cell units are arranged in multiple rows and columns, the heat absorber includes at least one heat absorbing sheet, the heat absorbing sheet is a sheet structure made of the hydrogel, and the heat absorbing sheet is disposed between two adjacent rows or columns of cell units.

In some examples, the heat absorber is disposed between the cell assembly and the housing.

In some examples, the heat absorber is sleeved on at least a part of the outer surface of the cell unit.

In some examples, the heat absorber covers at least the main heat-generating region of the cell unit, and the main heat-generating region is a region extending by a set value from the middle position on the outer surface of the cell unit toward the positive terminal of the cell unit.

In some examples, the cell unit is a cylindrical cell.

In some examples, the ratio of the volume of the heat absorber that is completely dehydrated to the volume of the heat absorber that is replenished with water is greater than or equal to 1 and less than or equal to 2.

In some examples, the thickness of the heat absorber is greater than or equal to 0.5 mm and less than or equal to 2 mm.

In some examples, the vent is formed on the housing, and at least part of the cooling airflow entering the housing from the vent is in contact with the heat absorber.

In some examples, the battery pack is configured to supply power to the power tool, and the power tool includes a handheld power tool, a table tool, or a wheeled power tool.

In some examples, the total energy of the battery pack is greater than or equal to 0.1 kW·h.

In some examples, the sweating temperature of the heat absorber is lower than the over-temperature protection temperature of the battery pack.

In some examples, the ratio of the volume of the heat absorber to the discharge power of the battery pack ranges from 25 mm³/W to 122 mm³/W.

In some examples, in the case where the ratio of the sweating area of the heat absorber to the heat generation power of the cell assembly is greater than or equal to 1.4 cm²/W and less than or equal to 3.5 cm²/W, the temperature of the cell assembly is reduced by 12% to 24%.

A power tool system includes a housing; a printed circuit board assembly disposed in the housing; and a heat absorber disposed in the housing. The heat absorber includes a hydrogel.

In some examples, the heat absorber is in thermal contact with at least part of the printed circuit board assembly.

A heat dissipation structure is applied to a power tool system and includes a housing, a heat absorber at least partially disposed in the housing, and a moisture absorption device at least configured to transfer water to the heat absorber. The heat absorber includes a hydrogel.

In some examples, the housing is a thermally conductive silicone housing, a polyethylene terephthalate (PET) housing, a polyurethane (PU) housing, or an aluminum housing.

In some examples, the power tool system includes a handheld power tool, a garden power tool, a charger, and a battery pack.

### BRIEF DESCRIPTION OF DRAWINGS

FIG. 1 is a perspective view illustrating the structure of a power tool according to an example of the present application.
FIG. 2 is a perspective view illustrating the structure of a charging combination according to an example of the present application.
FIG. 3 is a view illustrating the structure of a battery pack according to an example of the present application.
FIG. 4 is an exploded view of a battery pack according to an example of the present application.
FIG. 5 is another exploded view of a battery pack according to an example of the present application.
FIG. 6 is a structural view of a group of heat absorbers in a battery pack according to an example of the present application.
FIG. 7 is a structural view of a cell assembly and a heat absorber in a battery pack according to an example of the present application.
FIG. 8 is a schematic diagram illustrating that the heat absorber in FIG. 7 covers a main heat-generating region of a cell unit.
FIG. 9 is another structural view of a cell assembly and heat absorbers in a battery pack according to an example of the present application.
FIG. 10 is a schematic view of a heat absorber according to an example of the present application.
FIG. 11 is a schematic view illustrating the structure of a capillary moisture absorption device according to an example of the present application.
FIG. 12 is a schematic view illustrating another structure of a capillary moisture absorption device according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

The present application is described below in conjunction with drawings and examples.

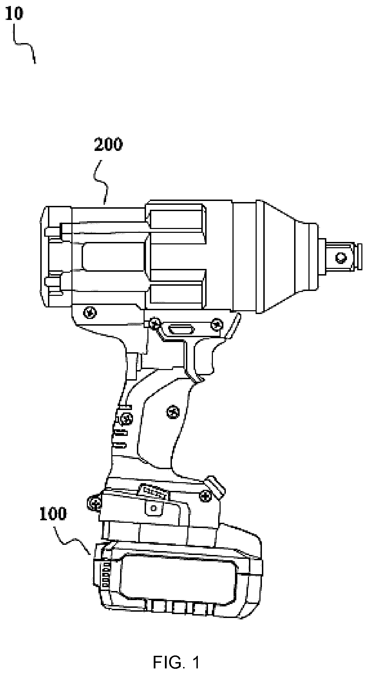

FIG. 1 is a perspective view illustrating the structure of a power tool according to the present application. A power tool 10 may be an electric drill that can at least provide torque to assist a screw into a workpiece and provide an impact force to perform an impact operation to satisfy different usage requirements of a user. In fact, the technical solutions of the present application are applicable to handheld power tools such as an electric drill, an electric wrench, an electric screwdriver, an electric hammer drill, an electric circular saw, and a sander, table power tools such as a table saw, outdoor tools such as a string trimmer, electric shears, a hedge trimmer, and an electric saw, and wheeled power tools such as a manned mower, a snow thrower, an all-terrain vehicle, and an electric motorcycle. The following examples are part, not all, of examples of the present application.

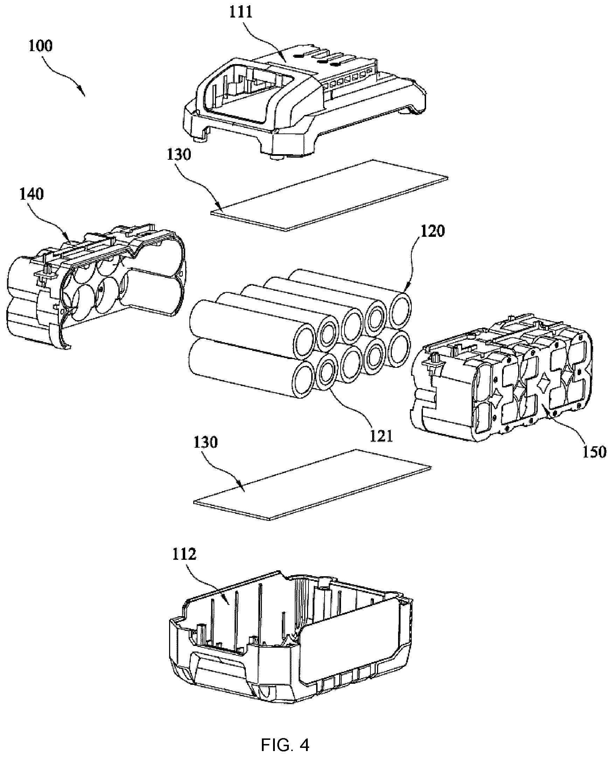

The power tool 10 includes a tool body 200 and a battery pack 100 configured to supply electrical energy to the tool body 200. In some examples, as shown in FIG. 4, the battery pack 100 is provided with a heat absorber 130 including a hydrogel to absorb the heat generated by the battery pack 100 during the discharging process, thereby achieving heat dissipation of the battery pack 100. In some examples, the battery pack 100 is detachably connected to the tool body 200 to supply electrical energy to the power tool 10. In some examples, the battery pack 100 is disposed in the tool body 200 to supply electrical energy to the power tool 10.

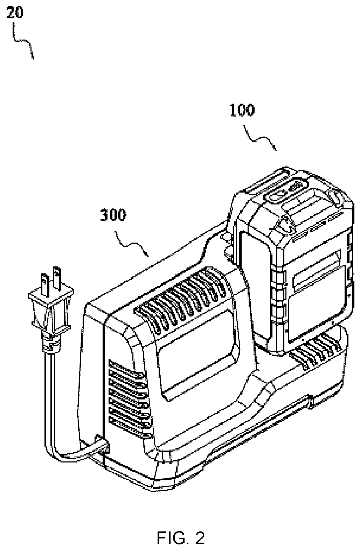

FIG. 2 is a perspective view illustrating the structure of a charging combination according to the present application. A charging combination 20 includes the battery pack 100 and a charger 300 configured to charge the battery pack 100. In some examples, the battery pack 100 is provided with the heat absorber 130 including the hydrogel to absorb the heat generated by the battery pack 100 during the charging process, thereby achieving heat dissipation of the battery pack 100.

In some examples, the battery pack 100 is a rechargeable lithium chemistry battery, such as a lithium-ion battery. Depending on different scenarios where the power tool 10 is used, the battery pack 100 may be a cylindrical lithium battery or a pouch battery. The rechargeable battery pack 100 may be configured to be another lithium chemistry battery with a lithium matrix or a rechargeable battery with another chemical matrix such as nickel cadmium and nickel metal hydride. The battery pack 100 may be in the shape of, for example, but not limited to, a square, a cylinder, or a tower. Further, the battery pack 100 may be a lithium iron phosphate battery.

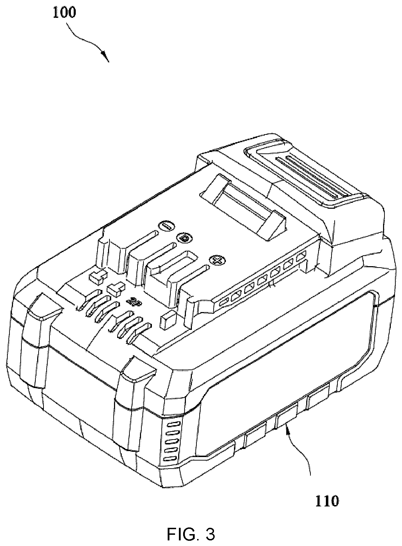

As shown in FIGS. 3 to 5, the battery pack 100 includes a housing 110, a cell assembly 120, and the heat absorber 130. The housing 110 forms an accommodation cavity, and the cell assembly 120 and the heat absorber 130 are disposed in the accommodation cavity. In some examples, the housing 110 includes an upper housing 111 and a lower housing 112. The upper housing 111 has an upper housing cavity opening downward, and the lower housing 112 has a lower housing cavity opening upward. The upper housing 111 and the lower housing 112 can be buckled together, and the upper housing cavity and the lower housing cavity can form a complete accommodation cavity. In some examples, the housing 110 may be formed by splicing a left housing and a right housing. The housing 110 designed as separate parts is easy to assemble, machine, and manufacture.

The cell assembly 120 includes at least one cell unit 121, and the cell unit 121 may be charged and discharged. The cell assembly 120 includes one cell unit 121 or multiple cell units 121, and the number of the cell units 121 depends on different rated nominal values of battery packs 100. Multiple rechargeable cell units 121 are connected in series so that battery packs 100 with different nominal values can be achieved.

The heat absorber 130 is in thermal contact with at least part of the cell assembly 120. In some examples, the heat absorber 130 is in thermal contact with at least some cell units 121 to absorb the heat generated by the cell assembly 120 during the charging and discharging processes of the battery pack 100. In some examples, the heat absorber 130 includes a hydrogel 133. The hydrogel 133 is a gel with water as the dispersion medium and is formed by introducing some hydrophobic groups and hydrophilic residues into the water-soluble polymer with a network crosslinked structure. The hydrophilic residues bind to water molecules and connect the water molecules such that the water molecules are inside the network. The hydrophobic residues are crosslinked polymers that swell when exposed to water. In some examples, a vent is formed on the housing 110, and at least part of the cooling airflow entering the housing 110 from the vent is in contact with the heat absorber 130 so that the heat dissipation effect can be improved, and the hydrogel 133 serving as the heat absorber 130 can absorb water from the air.

The thermal contact between the heat absorber 130 and the cell units 121 may be understood as that the heat absorber 130 is in direct contact with the surfaces of the cell units 121 to achieve heat conduction or may also be understood as that the heat absorber 130 is in contact with the surfaces of the cell units 121 via thermally conductive materials instead of being in direct contact, thereby achieving indirect heat conduction. The thermally conductive material may be a heat conductive member or air. The heat absorber 130 includes the hydrogel 133, which may be understood as that the heat absorber 130 is a monomeric heat-absorbing structure made solely of the hydrogel 133 or may also be understood as that the heat absorber 130 is a hybrid heat-absorbing structure made of the hydrogel 133 and other heat-absorbing materials.

Due to the existence of the internal resistance of the cell assembly 120, the cell assembly 120 generates a large amount of heat when the power tool 10 performs discharging at a large current. The heat dissipation by natural airflow alone cannot satisfy the discharging requirements of the battery pack 100. If the heat dissipation is not timely, a high temperature occurs in the battery pack 100 due to heat accumulation, seriously affecting the life and safety of the battery pack 100. In the battery pack 100 in the present application, the hydrogel 133 is used as the main component of the heat absorber 130, and the hydrogel 133 can absorb the heat generated by the cell assembly 120 during the charging and discharging processes and dissipate the heat by evaporating water. Moreover, the hydrogel 133 does not undergo a phase change during the heat absorption process and shrinks only in volume. When the battery pack 100 is not working, the hydrogel 133 can absorb water from the air, and the volume of the hydrogel 133 increases after the hydrogel 133 absorbs water. In this manner, through the repeated loss and absorption of water, repeated heat absorption and recycling can be achieved. Comparing the hydrogel 133 with a heat dissipation material that undergoes a phase change, no leakage or loss of materials occurs when the hydrogel 133 absorbs heat, thereby improving the user experience and the usage reliability of the battery pack 100.

The sweating temperature of the heat absorber 130 is lower than an over-temperature protection value of the battery pack 100 so that before the over-temperature protection of the battery pack 100 occurs, the heat generated by the cell assembly 120 during the charging and discharging processes of the battery pack 100 and absorbed by the heat absorber 130 has caused the temperature of the heat absorber 130 to rise to the sweating temperature. After the temperature of the heat absorber 130 rises to the sweating temperature, water evaporation occurs in the heat absorber 130 to dissipate heat from the battery pack 100 so that the temperature of the battery pack 100 starts to drop, thereby avoiding the following: the temperature of the battery pack 100 rises to the over-temperature protection value, causing an overheating power-off operation.

In some examples, when the temperature of at least a part of the heat absorber 130 is greater than 40°C, the heat absorber 130 starts to sweat and dissipate heat by evaporating water, that is, the sweating temperature is set to 40°C. In other examples, the sweating temperature may be set to another temperature, such as 45°C or 50°C.

In some examples, the ratio of the sweating volume of the heat absorber 130 to the capacity of the battery pack 100 is greater than or equal to 315 mm³/Ah and less than or equal to 630 mm³/Ah. In some examples, the ratio of the sweating volume of the heat absorber 130 to the capacity of the battery pack 100 may be 320 mm³/Ah, 400 mm³/Ah, 500 mm³/Ah, or 630 mm³/Ah.

In some examples, the ratio of the volume of the heat absorber 130 to the discharge power of the battery pack 100 is greater than or equal to 25 mm³/W and less than or equal to 122 mm³/W. In some examples, the ratio of the volume of the heat absorber 130 to the discharge power of the battery pack 100 may be 30 mm³/W, 60 mm³/W, 100 mm³/W, or 120 mm³/W.

When the sweating area of the heat absorber 130 and the heat generation power satisfy the preceding conditions, the temperature drop value of the heat absorber 130 is 5.5°C to 10.7°C, and the percentage of the reduction in temperature rise is 12% to 24%.

In some examples, when the ratio of the sweating area of the heat absorber 130 to the heat generation power of the cell assembly 120 is greater than or equal to 1.4 cm2/W and less than or equal to 3.5 cm²/W, the temperature of the cell assembly 120 is reduced by 12% to 24%. The temperature rate of the cell assembly 120 is 0.3°C/s to 0.9°C/s.

The preceding heat generation power is defined as the heat generation power of the cells corresponding to different discharge rates of the battery pack 100, q = I × I × R, and I = Q/T × C, where C denotes the discharge rate of the cells, Q denotes the capacity of the battery pack, and T1 is in hours. Two paths exist for the flow of the heat generation power of the cells. Path 1 is that the cells absorb heat, and Path 2 is that the heat is transferred to the components in the battery pack 100 and the external environment.

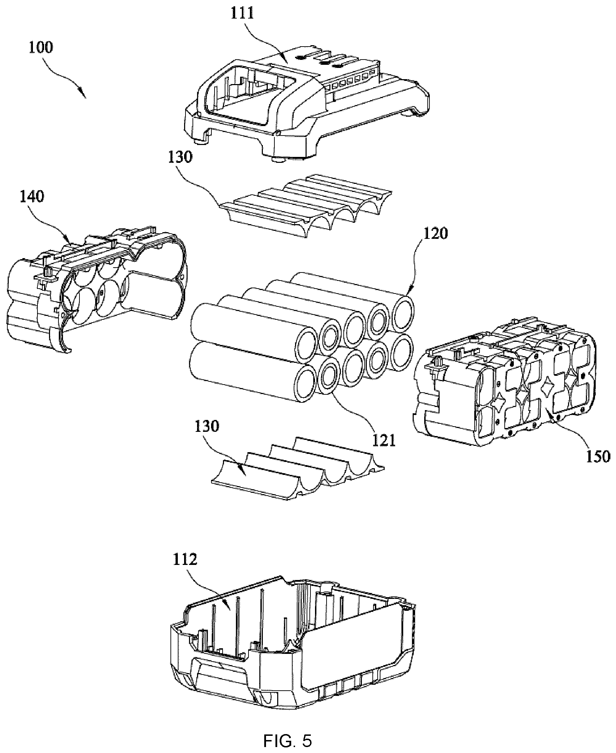

As shown in FIGS. 4 and 5, in some examples, the cell assembly 120 includes multiple cell units 121, the cell units 121 are cylindrical lithium-ion cells, and the multiple cell units 121 are arranged in multiple rows and columns so that the whole cell assembly 120 is in a cubic shape, and a gap exists between adjacent cell units 121. The heat absorber 130 includes at least one heat absorbing sheet, the heat absorbing sheet is a sheet structure made of the hydrogel 133, and the heat absorbing sheet has a certain flexibility and is deformable at a position where the heat absorbing sheet is disposed. When one heat absorbing sheet is provided, the flexible heat absorbing sheet can be disposed between two adjacent rows of cell units 121, disposed between two adjacent columns of cell units 121, or disposed on the outer end surface of the cell assembly 120. When multiple heat absorbing sheets are provided, part of the multiple heat absorbing sheets may be disposed between two adjacent rows or columns of cell units 121 or disposed between the cell assembly 120 and the housing 110, thereby improving the heat absorption efficiency and the cooling effect on the cell assembly 120.

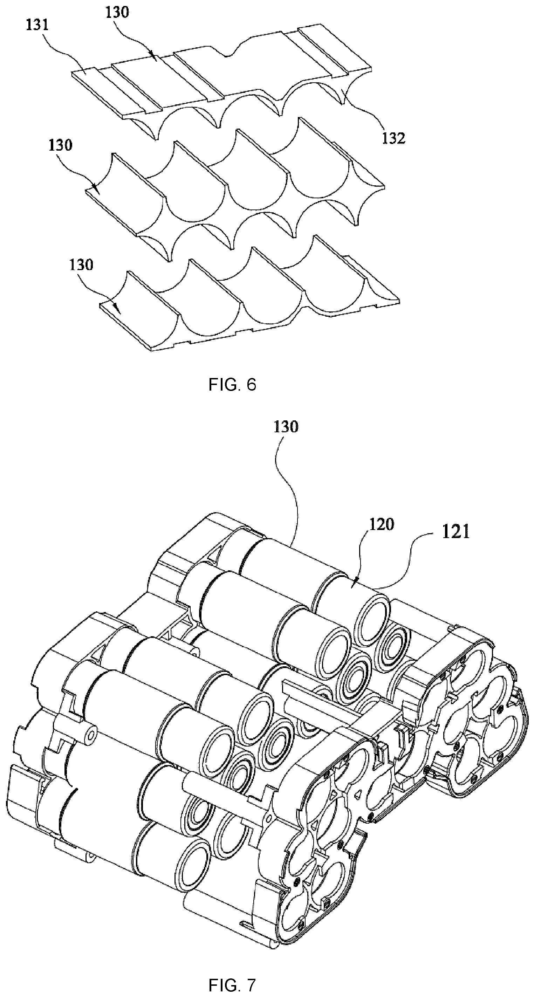

In some examples, the heat absorbing sheet is a corrugated sheet, and the cell units 121 are disposed in the indentations of the corrugated sheet. In this manner, the contact area between the heat absorbing sheet and the cell units 121 can be increased, thereby improving the heat absorption efficiency. In some examples, the heat absorbing sheet may be in the shape of a flat plate or in the shape of a support plate as shown in FIGS. 5 and 6. The heat absorber 130 in the shape of a support plate includes a plate-shaped body 131 and filling tips 132 protruding from the plate-shaped body 131. The filling tips 132 may be disposed on one end surface of the plate-shaped body 131 or disposed on two opposite end surfaces of the plate-shaped body 131. The surface between two filling tips 132 is a concave arc surface, and the cylindrical cell unit 121 can be disposed between the two filling tips 132. The filling tip 132 can be inserted into the gap formed between adjacent cell units 121, thereby improving the heat absorption efficiency while improving the support effect on the cell units 121.

In addition to the structures shown in FIGS. 4 and 5, in some examples, as shown in FIG. 7, the cell assembly 120 includes multiple cell units 121, the cell units 121 are cylindrical lithium-ion cells, the multiple cell units 121 are stacked and arranged in the shape of a frustum, and two adjacent cell units 121 in the same row and the cell unit 121 that is opposite to the two adjacent cell units 121 and in an adjacent row are arranged in the shape of a triangle. The heat absorber 130 includes at least one heat absorbing sleeve, and the heat absorbing sleeve is an annular structure made of the hydrogel 133 and is sleeved on the cell unit 121. The number of heat absorbing sleeves may be the same as or different from the number of cell units 121. One or multiple heat absorbing sleeves may be sleeved on one cell unit 121. The number of heat absorbing sleeves may be set according to actual requirements.

In some examples, to take into account both the heat absorption effect and the usage costs, the heat absorbing sleeve may be configured to cover at least the main heat-generating region of the cell unit 121, where the main heat-generating region is defined as a region extending by a set value from the middle position on the outer surface of the cell unit 121 toward the positive terminal of the cell unit 121.

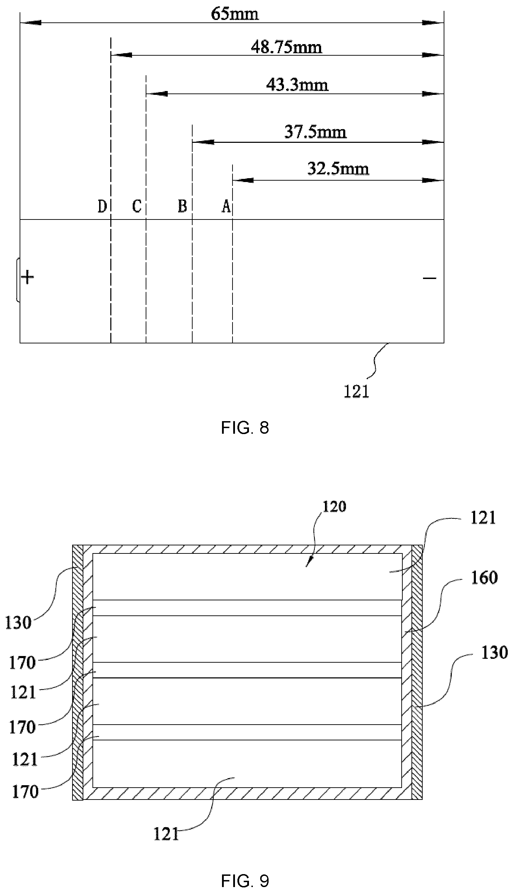

In some examples, as shown in FIG. 8, the length of the cell unit 121 is about 65 mm and the diameter is about 18 mm, and the region where the temperature of the cell unit 121 rises fastest during charging and discharging is a region extending by 5 mm from the middle of the outer surface of the cell unit 121 toward the positive terminal. That is to say, the region defined by extending by 5 mm from the middle position A (about 32.5 mm from the negative terminal) toward the positive terminal to the position B (about 37.5 mm from the negative terminal) in the longitudinal direction of the cell unit 121 is the region where the temperature of the cell unit 121 rises most easily and fastest to the extreme protection temperature. Therefore, in some examples, this region is selected as the main heat-generating region of the cell unit 121, and the heat absorber 130 is sleeved on this region.

To achieve a more ideal heat dissipation effect, in some examples, the heat absorber 130 may be sleeved on a region defined by extending by a greater distance in the longitudinal direction of the cell unit 121 from the middle position A (about 32.5 mm from the negative terminal) toward the positive terminal to the position C (about 43.3 mm from the negative terminal), which is two-thirds of the longitudinal length of the entire cell unit 121 from the negative terminal or a region defined by extending by a greater distance in the longitudinal direction of the cell unit 121 from the middle position A (about 32.5 mm from the negative terminal) toward the positive terminal to the position D (about 48.75 mm from the negative terminal), which is three-quarters of the longitudinal length of the entire cell unit 121 from the negative terminal. In this case, one of these regions is selected as the main heat-generating region of the cell unit 121. That is to say, the ratio of the area of the main heat-generating region to the area of the cylindrical surface of the cell unit 121 is 1:13 to 1:4.

In addition to the structures shown in FIGS. 4, 5, and 7, in some examples, as shown in FIG. 9, when the battery pack 100 is a pouch battery, the cell assembly 120 includes multiple cell units 121, the cell units 121 are sheet cells, and the multiple cell units 121 are stacked. After the multiple cell units 121 are stacked, the multiple cell units 121 are entirely coated with the sealant. After the sealant cures, a sealant layer 160 coating the entire cell assembly 120 is formed. The sheet heat absorbers 130 are attached to the sealant layer 160. In some examples, multiple heat absorbers 130 are provided and attached to different side surfaces of the sealant layer 160. In some specific examples, a thermal insulation layer 170 is disposed between two adjacent layers of cell units 121.

In some examples, the ratio of the volume of the heat absorber 130 that is completely dehydrated to the volume of the heat absorber 130 that is replenished with water is greater than or equal to 1 and less than or equal to 2. The heat absorber is completely dehydrated in a high-temperature baking method. The heat absorber 130 is left at room temperature for 24 hours and then baked at 45°C (in a high-temperature drying oven) for 8 hours. It is believed that the heat absorber 130 is completely dehydrated in this case. In some examples, the thickness of the heat absorber 130 is greater than or equal to 0.5 mm and less than or equal to 2 mm. In some examples, the density of the heat absorber 130 is 1.23 g/cm³. In some examples, the water absorbing capacity of the heat absorber 130 is 35%. In some examples, the thermal conductivity of the heat absorber 130 is 0.5 W/m·K.

In some examples, the total energy of the battery pack 100 is greater than or equal to 0.1 kW·h and less than or equal to 2 kW·h. In some examples, the total energy of the battery pack 100 is greater than or equal to 0.2 kW·h and less than or equal to 1 kW·h. In some examples, the total energy of the battery pack 100 is equal to 0.5 kW·h, 1 kW·h, 1.5 kW·h, or 2 kW·h.

With continued reference to FIGS. 4 and 5, the battery pack 100 further includes a first limiting frame 140 and a second limiting frame 150. The first limiting frame 140 and the second limiting frame 150 are disposed in the accommodation cavity of the housing 110 and distributed at two ends of the cell units 121 and the cell assembly 120 formed thereby, respectively. Each of the first limiting frame 140 and the second limiting frame 150 is disposed in a plane extending perpendicular to the longitudinal direction of the multiple cell units 121. The first limiting frame 140 and the second limiting frame 150 are used for supporting the multiple cell units 121 and the cell assembly 120 formed thereby and forming the cell assembly 120 into a compact structure in a mechanical manner through fixing structures such as screws and snaps.

In some examples, the first limiting frame 140 and the second limiting frame 150 may be made of thermally conductive materials, such as aluminum or silicon carbide. The first limiting frame 140 and the second limiting frame 150 mate with each other and are fixed together in a mechanical manner such as screws, thereby encapsulating the cell assembly 120. The first limiting frame 140 and the second limiting frame 150 are in full contact with the heat absorber 130 and can well conduct the heat generated by the cell units 121, thereby achieving a good heat dissipation effect.

In addition, the battery pack 100 further includes electronic devices configured to perform internal and external control and protection measures, battery pack terminals connected to an external charger or the power tool 10, and a cell unit connection mechanism. Internal configurations such as the electronic devices configured to perform internal and external control and protection measures, the battery pack terminals connected to the external charger or the power tool 10, and the cell unit connection mechanism are all common configurations. Therefore, the details are not repeated in the specification and drawings.

The present application further provides the power tool 10. The power tool 10 includes the housing 110, a printed circuit board assembly, and the heat absorber 130. The printed circuit board assembly is disposed in the housing 110. The heat absorber 130 is in thermal contact with at least part of the printed circuit board assembly to absorb heat generated by the printed circuit board assembly. The heat absorber 130 includes the hydrogel 133. In the power tool 10, the heat absorber 130 is in thermal contact with the printed circuit board assembly. The hydrogel 133 included in the heat absorber 130 can absorb the heat generated during the operation of the printed circuit board assembly, and water evaporation occurs after the temperature reaches the sweating temperature, thereby achieving heat dissipation of the printed circuit board assembly with high heat dissipation efficiency and a good heat dissipation effect.

In some examples, the printed circuit board assembly includes a printed circuit board and a heat conductor, where the heat conductor is disposed between the printed circuit board and the heat absorber 130. The printed circuit board emits more heat due to the increase in power density, and the heat can be quickly transferred to the heat absorber 130 through the heat conductor and absorbed by the heat absorber 130. The heat absorber 130 including the hydrogel 133 has a good heat dissipation effect.

In some examples, the heat conductor has a layered structure, and the heat conductor includes at least one of a thermally conductive silicone layer, a PET layer, a PU layer, and an aluminum layer, where PET is commonly known as polyester resin, and PU is also known as polyurethane, which is the full name.

In some examples, the heat conductor is a single-layer structure, and the heat conductor may be any one of the thermally conductive silicone layer, the PET layer, the PU layer, and the aluminum layer. In another specific example, the heat conductor is a multi-layer structure, the materials of adjacent layers may be the same or different, and each layer may be the thermally conductive silicone layer, the PET layer, the PU layer, or the aluminum layer.

In some examples, the thickness of the heat absorber 130 is greater than or equal to 0.2 mm and less than or equal to 3 mm. In some examples, the thickness of the heat absorber 130 may be 0.6 mm, 1 mm, 1.5 mm, 2 mm, or 3 mm.

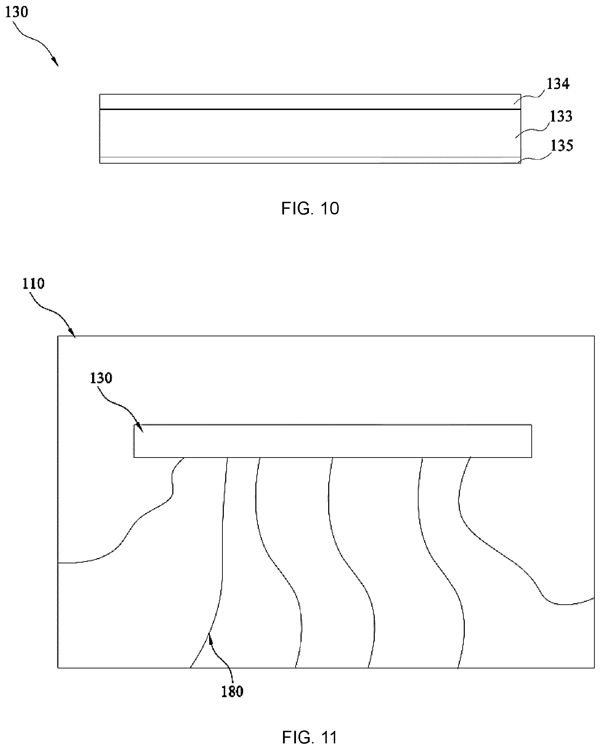

As shown in FIG. 10, the heat absorber 130 has a contact surface 135 and a sweating surface 134. The contact surface 135 is in thermal contact with the heat conductor. When the temperature rises to the first target temperature, the sweating surface 134 dissipates heat through sweating. When the temperature drops to the second target temperature, the sweating surface 134 absorbs water in the environment. The second target temperature is lower than the first target temperature. The first target temperature is the sweating temperature of the heat absorber 130. In some examples, the sweating temperature is set to 40°C. Of course, in other examples, the sweating temperature may be set to another temperature, such as 45°C, 50°C, or a higher temperature. The second target temperature is the moisture absorption temperature of the heat absorber 130. In an example, the moisture absorption temperature is set to 30°C or 25°C. The first target temperature and the second target temperature in the present application should be set based on the actual parameters of the battery pack 100 and the heat absorber 130.

In some examples, the heat absorber 130 further has a housing structure at least partially covering the sweating surface 134. To further improve the heat dissipation efficiency, in some examples, the vent is formed on the housing 110, and at least part of the cooling airflow entering the housing 110 from the vent is in contact with the heat absorber 130. In some specific examples, the vent and the heat absorber 130 are opposite to each other, that is, in a vertical plane, the projection of the vent and the projection of the heat absorber 130 at least partially overlap. In a specific example, the vent is a regular hole such as a rectangular hole or a circular hole or may be a more aesthetically pleasing irregular-shaped hole.

Two heat absorbers 130 are provided, one of which is in thermal contact with the printed circuit board assembly and the other of which is in thermal contact with the electric motor of the power tool 10. The electric motor generates a large amount of heat during operation. For example, for an inrunner, the temperature of the housing of the electric motor is relatively high and the efficiency of heat dissipation to the external environment is low. For an outrunner, due to a low rotational speed and the fact that the stator, which is the heat source, is on the inside, heat dissipation is difficult. In the present application, the heat absorber 130 is provided on the electric motor to absorb the heat dissipated from the electric motor, thereby enhancing the heat dissipation of the electric motor and avoiding overheating protection of the electric motor.

In other examples, multiple heat absorbers 130 may be provided. For example, three or four heat absorbers 130 may be provided. In addition to being disposed on the printed circuit board assembly and the electric motor, the heat absorbers 130 may be in thermal contact with other heat-generating components in the power tool 10.

The power tool 10 further includes a heat absorber water replenishment structure configured to provide water to the heat absorber 130. The heat absorber 130 inevitably loses water during the alternating process of sweating and moisture absorption. To avoid a significant reduction in the heat absorption efficiency of the heat absorber 130 due to water loss, the power tool 10 further includes the heat absorber water replenishment structure that can provide water to the heat absorber 130.

In some examples, the heat absorber water replenishment structure is a water bladder filled with water connected to the heat absorber 130. In some examples, the heat absorber water replenishment structure is a moisture absorption device at least configured to transfer water to the heat absorber 130. For example, the moisture absorption device includes a capillary moisture absorption device, a bidirectional condensation control fiber layer, and a water collection structure disposed on the housing 110. The water collection structure is a conical through hole. The water absorbed by the moisture absorption device is the water droplets on the inner wall surface of the housing 110 into which water evaporating off of the heat absorber 130 condenses.

For the capillary moisture absorption device, the capillary moisture absorption device includes at least one capillary 180, an end of the capillary 180 is connected to the hydrogel 133, and the other end of the capillary 180 is disposed on the inner wall surface of the housing 110 so that water condensing on the inner wall surface of the housing 110 can be inputted into the hydrogel 133 through the capillary 180.

In an example, as shown in FIG. 11, the capillary moisture absorption device includes multiple capillaries 180 that are independent of each other, an end of each capillary 180 is connected to the hydrogel 133, and the other end of each capillary 180 is disposed on the inner wall surface of the housing 110.

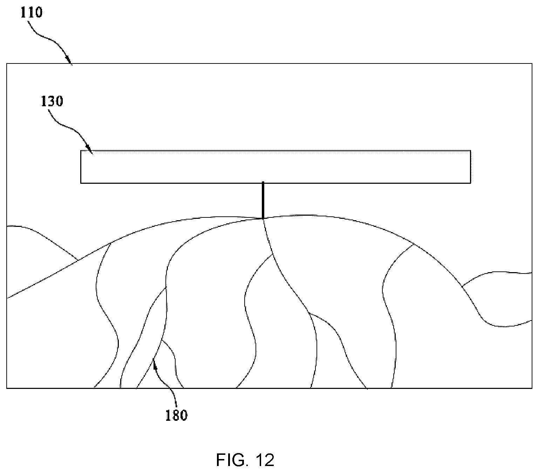

In another example, as shown in FIG. 12, the capillary moisture absorption device includes multiple capillaries 180 that are interconnected to form a tree-like structure and include a main capillary and multiple branch capillaries, an end of the main capillary is connected to the hydrogel 133, an end of each of the multiple branch capillaries is connected to the other end of the main capillary, and the other end of each of the multiple branch capillaries is connected to the hydrogel 133.

For the bidirectional condensation control fiber layer, such as the humidity condensation control fiber (HCCF) bidirectional condensation control fiber, the moisture absorption and release processes of the bidirectional condensation control fiber are contrary to those of the hydrogel 133. The bidirectional condensation control fiber layer can absorb water when the water in the hydrogel 133 evaporates and can release water when the hydrogel 133 absorbs water and regenerates. That is to say, when the water in the hydrogel 133 starts to evaporate, the humidity around the hydrogel 133 increases, and the bidirectional condensation control fiber starts to absorb water; when the hydrogel 133 needs to absorb water and regenerate, the bidirectional condensation control fiber may release water, thereby always maintaining a constant humidity in the environment and reducing the water absorption and regeneration time of the hydrogel 133.

For the conical through hole, the dimension of the through hole gradually decreases in a direction from the inner side of the housing 110 toward the housing 110, thereby forming a tapered small hole. By utilizing the capillary action caused by the gradual reduction of the diameter of the hole, the liquid on the surface of the housing 110 is discharged to the outside of the housing 110 and evaporated. This arrangement has two advantages: first, the impact of the liquid droplets in the battery pack 100 on the safety of the battery pack 100 is reduced; second, the secondary evaporation of the liquid droplets on the outside can further enhance the heat dissipation effect. In some examples, multiple through holes are provided and arranged at intervals on the housing 110. The arrangement of the multiple through holes is conducive to further improving the moisture absorption efficiency.

The present application further provides the power tool 10. The power tool 10 includes the housing 110, the printed circuit board assembly, and the heat absorber 130. The printed circuit board assembly is disposed in the housing 110, the heat absorber 130 includes the hydrogel 133, the housing 110 includes a grip, and the heat absorber 130 is at least partially disposed in the grip. In the power tool 10, the heat absorber 130 is disposed in the grip, and the hydrogel 133 included in the heat absorber 130 can absorb the heat at the grip, thereby reducing the temperature of the grip and improving the user's grip experience.

In some examples, the thickness of the heat absorber 130 is greater than or equal to 0.2 mm and less than or equal to 3 mm. In a specific example, the thickness of the heat absorber 130 is 0.6 mm. In a specific example, the thickness of the heat absorber 130 is 1 mm. In a specific example, the thickness of the heat absorber 130 is 2 mm. In a specific example, the thickness of the heat absorber 130 is 3 mm.

In an example, the heat absorber 130 is disposed on the inner side of the housing 110. The heat absorber 130 is disposed on the inner side of the housing 110 so that while the heat absorber 130 is closer to the heat source and absorbs heat faster, aesthetics is ensured and the heat absorber 130 is less likely to fall off.

In an example, the vent is formed on the housing 110, and at least part of the cooling airflow entering the housing 110 from the vent is in thermal contact with the heat absorber 130. In some specific examples, the vent and the heat absorber 130 are opposite to each other, that is, in a vertical plane, the projection of the vent and the projection of the heat absorber 130 at least partially overlap. In a specific example, the vent is a regular hole such as a rectangular hole or a circular hole or may be a more aesthetically pleasing irregular-shaped hole.

In an example, the shape of the heat absorber 130 is adapted to the shape of at least part of the grip. That is, the heat absorber 130 and the grip have similar shapes so that the heat absorber 130 can fit the grip more perfectly. In this manner, the temperature at parts of the grip is balanced, which is conducive to improving the user's grip experience.

The present application further provides a charging device. Optionally, the charging device is the charger 300 for charging the battery pack 100, or the charging device is an external charging device. The charging device includes the housing 110, the printed circuit board assembly, and the heat absorber 130. The printed circuit board assembly is disposed in the housing 110. The heat absorber 130 is disposed in the housing 110. The heat absorber 130 includes the hydrogel 133. In the power tool 10, the heat absorber 130 is disposed in the charging device. The hydrogel 133 included in the heat absorber 130 can quickly absorb the heat generated by the charging device during the charging process, thereby reducing the temperature inside the charging device and preventing the charging device from overheating.

In some examples, the heat absorber 130 is in thermal contact with at least part of the printed circuit board assembly. In the charging device, the heat absorber 130 is in thermal contact with the printed circuit board assembly. The hydrogel 133 included in the heat absorber 130 can absorb the heat generated during the operation of the printed circuit board assembly, and water evaporation occurs after the temperature reaches the sweating temperature, thereby achieving heat dissipation of the printed circuit board assembly with high heat dissipation efficiency and a good heat dissipation effect.

In some examples, the printed circuit board assembly includes a printed circuit board and a heat conductor, where the heat conductor is disposed between the printed circuit board and the heat absorber 130. The printed circuit board emits more heat due to the increase in power density, and the heat can be quickly transferred to the heat absorber 130 through the heat conductor and absorbed by the heat absorber 130. The heat absorber 130 including the hydrogel 133 has a good heat dissipation effect.

In some examples, the charging device further includes a rectifier, and the heat absorber 130 is at least partially in thermal contact with the rectifier. In the charging device, the heat absorber 130 is in thermal contact with the rectifier. The hydrogel 133 included in the heat absorber 130 can absorb the heat generated during the operation of the rectifier, and water evaporation occurs after the temperature reaches the sweating temperature, thereby achieving heat dissipation of the rectifier with high heat dissipation efficiency and a good heat dissipation effect.

In some examples, the heat conductor has a layered structure, and the heat conductor includes at least one of a thermally conductive silicone layer, a PET layer, a PU layer, and an aluminum layer. PET is commonly known as polyester resin, and PU is also known as polyurethane, which is the full name.

In a specific example, the heat conductor is a single-layer structure, and the heat conductor may be the thermally conductive silicone layer, the PET layer, the PU layer, or the aluminum layer. In another specific example, the heat conductor is a multi-layer structure, the materials of adjacent layers may be the same or different, and each layer may be the thermally conductive silicone layer, the PET layer, the PU layer, or the aluminum layer.

In some examples, the thickness of the heat absorber 130 is greater than or equal to 0.2 mm and less than or equal to 3 mm. In a specific example, the thickness of the heat absorber 130 is 0.6 mm. In a specific example, the thickness of the heat absorber 130 is 1 mm. In a specific example, the thickness of the heat absorber 130 is 2 mm. In a specific example, the thickness of the heat absorber 130 is 3 mm.

In some examples, the charging device further includes a cooling fan, and the cooling airflow generated by the cooling fan at least partially passes through the heat absorber 130. The operation of the cooling fan can speed up the flow of gas in the charging device. The cooling fan can improve the heat dissipation effect of the heat absorber 130.

The present application further provides a heat dissipation structure applied to a power tool system. The heat dissipation structure includes the housing 110 and the heat absorber 130. The heat absorber 130 is disposed in the housing 110. The heat absorber 130 includes the contact surface 135 and the sweating surface 134. The heat absorber 130 includes the hydrogel 133. The sweating surface 134 is selectively sealed by the housing 110.

In some examples, the housing 110 is a thermally conductive silicone housing, a PET housing, a PU housing, or an aluminum housing.

In some examples, the power tool 10 includes a handheld power tool 10, a garden power tool 10, a charger 300, and a battery pack 100.

In some examples, the housing 110 has a selectively openable cover.

The present application further provides a heat dissipation structure applied to a power tool system. The heat dissipation structure includes the housing 110, the heat absorber 130, and the moisture absorption device. The heat absorber 130 is at least partially disposed in the housing 110. The moisture absorption device is at least configured to transfer water to the heat absorber 130. The heat absorber 130 includes the hydrogel 133.

In some examples, the moisture absorption device includes the capillary moisture absorption device, the capillary moisture absorption device includes at least one capillary 180, an end of the capillary 180 is connected to the hydrogel 133, and the other end of the capillary 180 is disposed on the inner wall surface of the housing 110 so that water condensing on the inner wall surface of the housing 110 can be inputted into the hydrogel 133 through the capillary 180.

In an example, the capillary moisture absorption device includes multiple capillaries 180 that are independent of each other, an end of each capillary 180 is connected to the hydrogel 133, and the other end of each capillary 180 is disposed on the inner wall surface of the housing 110. In another example, the capillary moisture absorption device includes multiple capillaries 180 that are interconnected to form a tree-like structure and include a main capillary and multiple branch capillaries, an end of the main capillary is connected to the hydrogel 133, an end of each of the multiple branch capillaries is connected to the other end of the main capillary, and the other end of each of the multiple branch capillaries is connected to the hydrogel 133.

In some examples, the moisture absorption device includes multiple through holes formed on the housing 110, and the dimension of the through hole gradually decreases in a direction from the inner side of the housing 110 toward the housing 110. By utilizing the capillary action caused by the gradual reduction of the diameter of the hole, the liquid on the surface of the housing 110 is discharged to the outside of the housing 110 and evaporated. This arrangement has two advantages: first, the impact of the liquid droplets in the battery pack 100 on the safety of the battery pack 100 is reduced; second, the secondary evaporation of the liquid droplets on the outside can further enhance the heat dissipation effect. In some examples, multiple through holes are provided and arranged at intervals on the housing 110. The arrangement of the multiple through holes is conducive to further improving the moisture absorption efficiency.

In some examples, the moisture absorption device includes the bidirectional condensation control fiber layer, and the bidirectional condensation control fiber layer can absorb water when the water in the hydrogel 133 evaporates and can release water when the hydrogel 133 absorbs water and regenerates. The moisture absorption and release processes of the bidirectional condensation control fiber are contrary to those of the hydrogel 133. When the water in the hydrogel 133 starts to evaporate, the humidity around the hydrogel 133 increases, and the bidirectional condensation control fiber starts to absorb water; when the hydrogel 133 needs to absorb water and regenerate, the bidirectional condensation control fiber may release water, thereby always maintaining a constant humidity in the environment and reducing the water absorption and regeneration time of the hydrogel 133.

In some examples, the housing 110 is a thermally conductive silicone housing, a PET housing, a PU housing, or an aluminum housing.

In some examples, the power tool system includes a handheld power tool 10, a garden power tool 10, a charger 300, and a battery pack 100.

In some examples, the housing 110 has a selectively openable cover.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A battery pack applicable to a power tool, comprising:
a housing;
a cell assembly disposed in the housing and comprising at least one cell unit; and
a heat absorber in thermal contact with at least part of the at least one cell unit, wherein the heat absorber is configured to absorb heat generated by the cell assembly during charging and discharging processes;
wherein the heat absorber comprises a hydrogel.

2. The battery pack of claim 1, wherein the cell assembly comprises at least two cell units, and the heat absorber is at least partially disposed between the at least two cell units.

3. The battery pack of claim 2, wherein a plurality of cell units are arranged in a plurality of rows and a plurality of columns, the heat absorber comprises at least one heat absorbing sheet, a heat absorbing sheet of the at least one heat absorbing sheet is a sheet structure made of the hydrogel, and the heat absorbing sheet is disposed between two adjacent rows or columns of cell units.

4. The battery pack of claim 1, wherein the heat absorber is disposed between the cell assembly and the housing.

5. The battery pack of claim 1, wherein the heat absorber is sleeved on at least a part of an outer surface of a cell unit of the at least one cell unit.

6. The battery pack of claim 5, wherein the heat absorber covers at least a main heat-generating region of the cell unit, and the main heat-generating region is a region extending by a set value from a middle position on the outer surface of the cell unit toward a positive terminal of the cell unit.

7. The battery pack of claim 6, wherein the cell unit is a cylindrical cell.

8. The battery pack of claim 1, wherein a ratio of a volume of the heat absorber that is completely dehydrated to a volume of the heat absorber that is replenished with water is greater than or equal to 1 and less than or equal to 2.

9. The battery pack of claim 1, wherein a thickness of the heat absorber is greater than or equal to 0.5 mm and less than or equal to 2 mm.

10. The battery pack of claim 1, wherein a vent is formed on the housing, and at least part of a cooling airflow entering the housing from the vent is in contact with the heat absorber.

11. The battery pack of claim 1, wherein the battery pack is configured to supply power to the power tool, and the power tool comprises a handheld power tool, a table tool, or a wheeled power tool.

12. The battery pack of claim 1, wherein total energy of the battery pack is greater than or equal to 0.1 kW·h.

13. The battery pack of claim 1, wherein a sweating temperature of the heat absorber is lower than an over-temperature protection temperature of the battery pack.

14. The battery pack of claim 1, wherein a ratio of a volume of the heat absorber to discharge power of the battery pack ranges from 25 mm³/W to 122 mm³/W.

15. The battery pack of claim 1, wherein in a case where a ratio of a sweating area of the heat absorber to heat generation power of the cell assembly is greater than or equal to 1.4 cm²/W and less than or equal to 3.5 cm²/W, temperature of the cell assembly is reduced by 12% to 24%.

16. A power tool system, comprising:
a housing;
a printed circuit board assembly disposed in the housing; and
a heat absorber disposed in the housing;
wherein the heat absorber comprises a hydrogel.

17. The power tool system of claim 16, wherein the heat absorber is in thermal contact with at least part of the printed circuit board assembly.

18. A heat dissipation structure applied to a power tool system and comprising:
a housing;
a heat absorber at least partially disposed in the housing; and
a moisture absorption device configured to transfer water to the heat absorber;
wherein the heat absorber comprises a hydrogel.

19. The heat dissipation structure of claim 18, wherein the housing is a thermally conductive silicone housing, a polyethylene terephthalate (PET) housing, a polyurethane (PU) housing, or an aluminum housing.

20. The heat dissipation structure of claim 18, wherein the power tool system comprises a handheld power tool, a garden power tool, a charger, and a battery pack.
